# EUROPEAN PATENT SPECIFICATION

(11) **EP 3 138 686 B1**
(45) Date of publication and mention of the grant of the patent: **15.04.2020**
(21) Application number: 16181804.2
(22) Date of filing: 28.07.2016
(51) Int. Cl.: B29D 22/00, B29C 45/14

(54) **PROCESS FOR PRODUCING A HOLLOW ITEM BY INJECTION-MOULDING**
VERFAHREN ZUR HERSTELLUNG EINES HOHLEN GEGENSTANDES DURCH SPRITZGIESSEN
PROCÉDÉ DE PRODUCTION D'UN ARTICLE CREUX PAR MOULAGE PAR INJECTION

(30) Priority: 17.08.2015 IT UB20153145
(43) Date of publication of application: 08.03.2017
(73) Proprietor: Plastimedia S.r.l., 31041 Cornuda (TV) (IT)
(72) Inventor: GATTO, Adriano, 31044 Montebelluna (IT); VIDOTTO, Alessio, 31040 Trevignano (IT)
(74) Representative: Gonella, Mario

(56) References cited:
- WO-A2-03/060217
- DE-A1-102012 024 953
- US-A1- 2015 219 261

## Description

### TECHNICAL SECTOR OF THE INVENTION

. This invention relates to a process of injecting plastics material and to a product obtained by using said process.

. This invention is applied in the industrial production of items with rigid and soft portions, obtained by the injection of plastics material by using injection-moulding equipment.

### STATE OF THE ART

. The main industrial processes used for moulding plastics materials are known by the names of bi-injection, over-injection and co-injection.

. These processes use equipment comprising a system for injecting liquid material that prepares the plastics material in the form necessary for it to be introduced into one or more moulds. The moulds define one or more cavities, into which the plastics material is injected, so that on cooling it substantially retains the form of the cavities into which it was introduced.

. In bi-injection processes, the equipment comprises two or more injectors in order to achieve, in a first moment, the filling of a first mould cavity and, sequentially, the filling of one or more mould cavities with chemically compatible materials, so as to be able to produce items having different mechanical and aesthetic characteristics between the materials injected.

. In the over-injection processes, a component that is previously injected and chemically compatible, or capable of having a geometric predisposition to achieve a mechanical adhesion to the molten material subsequently injected into the mould cavity is positioned on the mould, so as to be able to produce items having mechanical and aesthetic characteristics that differ from one another.

. Lastly, in co-injection, inside a single mould cavity there are two separate injection channels so as to be able to inject two materials that differ from one another due to their technical and aesthetic characteristics, but are chemically compatible, sequentially at the same injection point. In this way, products that have an external part with a different composition compared to the internal part can be obtained.

. With the known processes of over-injection and bi-injection it is possible to achieve an injection of soft material that is moulded onto a rigid material, since the rigid material forms a solid base.

. The injection of a rigid material onto a soft material is much more difficult and problematic since the rigid material has a damaging action on the soft material, for example by dragging and overheating the soft material.

. In the production of plastics material that has forms with a concave portion or in any event having a cavity, inside said cavity it is difficult to mould soft material that is softer than a respective more rigid material, for example when it is necessary to produce a rigid shell that comprises inside it a portion of soft material that is more comfortable when in contact with a user.

. An example of this use is found in the sector of footwear or protective devices such as knee-pads, elbow-pads or suchlike.

. For example, in the sector of sports footwear and particularly ski boots, this difference is more easily verifiable because outer casings of rigid plastics are produced with a soft boot that provides a comfortable interface with the user's foot.

. Patent US 4,447,967 describes a sports shoe for athletics that comprises a sock onto which is over-injected a reinforcing mesh structure made of a plastics material; the tongue of the shoe, obtained separately, is then sewn onto the shoe thus obtained.

. One drawback of the solution of the above-described state of the art consists in the fact that the tongue of the shoe is obtained separately, possibly completed by a soft padding part, and is sewn to the rest of the shoe after the over-injection operation, thus making an additional operation necessary in order to obtain the finished product.

. Another known process is that disclosed in WO2010/061409 for a motorcycling boot, in which an upper is placed on a male element in the form of the lower leg with foot, so as to cover the male element with said upper.

. The upper is previously assembled and sewn, with internally soft and externally rigid material. The upper, with its soft interior, is more comfortable for the user than the rigid material with which the outer shell of the boot is made.

. In the document mentioned, a process is disclosed that enables the over-injection of a rigid plastics material that is harder than the softer material of which the inside of the upper is made.

. The limitation of this process is the use of a rigid external material for the upper previously assembled and sewn, that is capable of resisting the temperatures and pressures of the over-injection of the second rigid material.

**.** Over-injection is therefore performed on a material that is sufficiently hard. If, in fact, we wish to use an upper that has a softer material on the outside as well, in order further to improve the comfort of use, we are faced with a compromise that cannot be resolved.

. If, in fact, soft material with a melting temperature and hardness well below that of the rigid material is used, it is dragged by the flow of the more rigid material when the latter is injected into the mould.

. The melting temperatures are restricted to having a maximum difference of 50 degrees centigrade, while the hardness levels, advantageously measured in degrees Shore, must not differ by more than 40 degrees Shore.

. It is therefore not possible to achieve with the known technologies and processes a process in which a bi-injection of a soft material, in a first moment, and of a rigid material in a second moment is performed, because the soft material struggles to maintain the desired position and is subject to a dragging effect and/or damage by the rigid material and therefore a satisfactory result cannot be achieved. This problem is due mainly to two factors, which are the difference in hardness and the difference in melting temperature between the two materials used.

. The process made possible by the known art is therefore solely that of over-injecting soft material onto a base of rigid material, because the rigid material is not deformed by the over-injection of the soft material.

. In fact, if plastics materials are to be used that have very different hardness levels and melting temperatures from the material in which the outer casing is made, these internal soft portions require fixing methods such as gluing, sewing or other means, that do not guarantee optimum comfort or resistance to wear because they are likely to detach from the surfaces of the casing.

. DE 10 2012 024 953 discloses a plastic-cast part which has a cavity molded by a plastic material, where an insertion part is provided for forming the cavity and is provided with a hollow profile. The insertion part is molded by the plastic material.

. WO 03/060217 concerns a textile complex for composite parts comprising, related to one of the surfaces of a web, an assembly bound to said surface having a first decorative function and a second barrier function designed to counter migration of the injected thermoset resin in the web-assembly direction. The invention is useful for producing composite parts with hollow-shaped body.

### SUMMARY OF THE INVENTION

. The main aim of the present invention is to overcome the drawbacks of the known art by devising a process that enables a hollow item to be made that comprises a rigid outer shell and soft internal portions, of a sports shoe, particularly a ski boot, that can be obtained substantially in a finished manner with high-productivity industrial methods, such as over-injection or bi-injection, that is reliable over time and does not require the use of special materials, such as resilient fabrics resistant to high temperatures, to enable its use in an appropriate way.

. As part of the above-described task, one aim of the present invention is to devise a process that enables a sports shoe to be obtained in which the introduction and gripping of the foot occur in an easy and optimum way, with an internal soft material that favours the comfort of the user's foot.

. Another aim is to devise a process for producing a hollow item, such as a sports shoe, in particular a ski boot, that can be performed using industrial methods with a high production capacity, such as over-injection or bi-injection, in which it is possible to inject molten rigid material onto a base of soft material avoiding undesired deformations of the soft material, without compromising its integrity or functionality.

. Yet another aim is to devise a process for producing a hollow item, such as a sports shoe, in particular a ski boot, in which said item can be obtained in a substantially finished way and is capable of fulfilling the task and aims described above.

. The last but not least aim is to devise a process that fulfils the task and above-mentioned aims at competitive costs and that can be achieved using conventional and known systems, machinery and equipment.

. The above-mentioned task and aims, and others that will emerge more clearly below, are achieved by a process of producing a hollow item as defined in claim 1 and by a hollow item, for example a sports shoe, in particular a ski boot, as defined in claim 10.

### BRIEF DESCRIPTION OF THE FIGURES

. Further features and advantages of the present invention will emerge more clearly from the following description of a particular, but not exclusive, embodiment illustrated purely by way of a non-limiting example with reference to the accompanying drawings, in which:

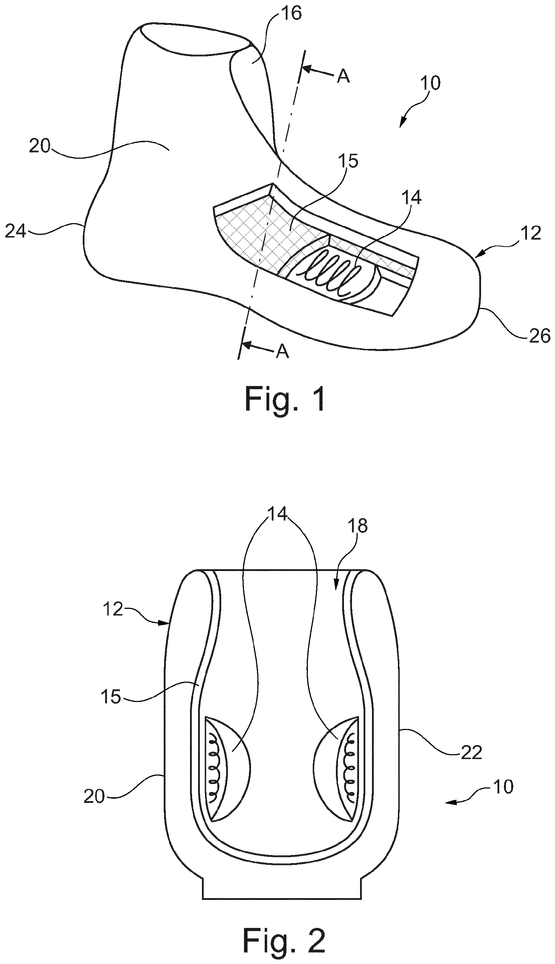

- Figure 1 is a partially cutaway schematic view of a product of an injection process according to the invention;
- Figure 2 is a schematic cross-sectional view of the product shown in Figure 1, along line A-A;
- Figures 3 to 5 show different phases of an injection process according to the present invention.

### DETAILED DESCRIPTION OF THE INVENTION

. With reference to the Figures referred to above, reference numeral 10 generically shows a sports shoe, in the embodiment shown by way of example in the accompanying Figures, composed of a ski boot; the sports shoe 10 comprises a casing 12, made of a basically rigid plastics material.

. A casing 12 according to the invention is preferably made of a rigid plastics material that has a melting temperature of between 150 and 250 degrees centigrade. Furthermore, the rigid plastic material preferably has a hardness, measured in SHD, of between 45 and 100.

. A list of thermoplastics materials that can be considered as rigid, given by way of non-limiting examples, includes: ABS, EVA, HDPE, LDPE, POM, PP, PS, SAN, SBC, PA, PET, PU and TPU.

. Contained inside the casing 12 are two soft inserts 14 that extend horizontally and internally within the casing 12, which is also provided with at least one opening flap 16 to allow a foot to be inserted into the sports shoe 10 in use.

. The casing 12 defines a cavity 18 to accommodate a foot and a portion of the leg of a user.

. The two soft inserts 14 are connected to the internal surface of the cavity 18 of the casing 12 to cover it at least partially, so as to improve the comfort of a user.

. Between the soft inserts 14 and the casing 12 a connecting layer 15 is advantageously interposed, composed for example of a thin sock, preferably made of a material that has a melting temperature that exceeds 150 degrees centigrade. Furthermore, the material with which the connecting layer 15 is made preferably has a hardness, measured in SHA, that exceeds 80.

. The device according to the invention can be a generic hollow item in which is provided a rigid outer casing or shell that comprises a cavity covered with a soft material; as previously mentioned, it consists of a sports shoe where it has at least one internal portion of the cavity of the shell made of a soft material.

. Naturally, the application of the process according to the present invention is not limited to items within the sports sector, but can also extend to any other item having a rigid external shell that forms a cavity capable of being covered with a soft material or insert.

. Hereinafter, the word casing shall mean a generic hollow item or external shell made of a rigid plastics material comprising one or more cavities.

. The casing 12 comprises a pair of lateral flanks 20, 22, connected together at the heel 24 and toe 26.

. The two soft inserts 14 are made of a soft plastics material that has a melting temperature of less than 150 degrees centigrade. Furthermore, the soft plastics material preferably has a hardness, measured in SHA, of between 5 and 80.

. A list of plastics and/or thermoplastics materials and/or two-component foams that can be considered as soft include, by way of non-limiting examples, SEBS, PVC, TPU, foamed PUs, expanded EVA and TPE-SEBS.

. The soft inserts 14 can be obtained using known processes and subsequently used as a base for the over-injection of the rigid material, or can be made in a first phase of injection of soft material in a bi-injection process. This bi-injection process therefore envisages at least one other phase with the injection of rigid and chemically compatible material.

. The soft inserts 14 are thus permanently connected to the casing 12 at the internal surfaces of the lateral flanks 20, 22.

. The permanent connection of the soft inserts 14 to the casing 12 is achieved by means of over-injection or bi-injection, as will be explained in further detail below, in the part relating to the process.

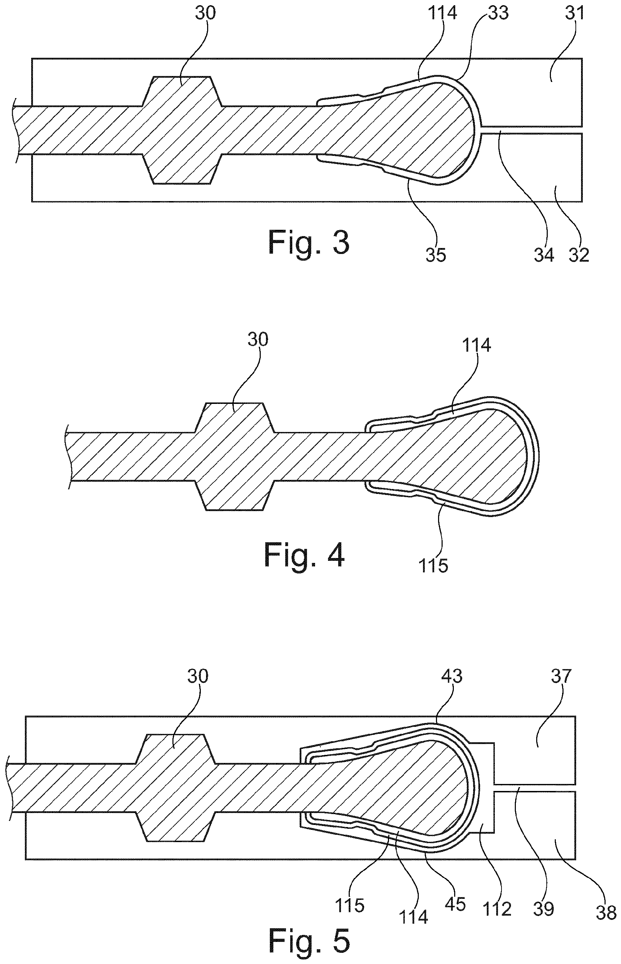

. The process of injecting plastics material according to the invention, in order to produce an item with rigid and soft portions, will now be described with reference to Figures 3 to 5.

. The process involves producing a sports shoe that comprises a soft insert 114 made of a soft material, to completely cover the inside of a casing 112, but it is clearly understood that this process can also produce the sports shoe 10 previously described, in which the soft material is present in the two soft inserts 14 that partially cover the inside of the casing 20 or in general a hollow item comprising a rigid external shell and one or more soft internal portions.

. The process according to the present invention comprises a preparation phase, shown in Figure 4, in which a soft insert 114 is positioned on one free end of a matrix 30. The soft insert 114 is covered with a connecting layer 115, a thin sock fitted onto the matrix 30 manually by an operator. The connecting layer 115, previously prepared, like the connecting layer 15 previously described, is preferably chemically compatible with the soft insert 114.

**.** The thickness of the connecting layer 15 and/or the connecting layer 115 is preferably between 0.04 millimetres and 1.00 millimetres.

. As a result of experiments and analyses, it has been identified that a range of thickness of between 0.04 millimetres and 0.55 millimetres has been more preferable, obtaining the advantage of greater elasticity and adhesion in the machining phases.

. A moulding phase then follows, schematically illustrated in Figure 5, in which a first semi-mould 37 and a second semi-mould 38 are used, comprising a first cavity 43 and a second cavity 45 respectively, counter-shaped to reproduce the respective lateral flanks of a casing 112, similar to the casing 12 previously described.

. The two semi-moulds 37, 38 are hermetically sealed on the matrix 30, obtained from the previous preparation phase, at the edges of the first and second cavity 43 and 45.

. Subsequently, the thermoplastics material, intended to form the casing 112, made for example from one of the rigid materials previously mentioned or from others, is injected, through a channel 39, into the space between the first and second cavity 43 and 45.

. Thanks to the presence of the connecting layer 115, the injected molten rigid material, which is at a temperature around its melting temperature, encounters the surface of the connecting layer 115 and is guided to fill the cavity to which it is destined, without damaging the surface of the soft insert 114 and avoiding the problems of the known art.

. The connecting layer 115 favours the flow of the rigid material, so that the soft insert 114 is protected and retains its dimensional, structural and other characteristics, as desired.

. Advantageously, the connecting layer 115 also performs the function of maintaining the position of one or more soft inserts on the matrix, so that the injection of the rigid material does not cause undesirable movements of the soft inserts, for example in the case of the soft inserts 14 of the sports shoe 10.

. Once the moulding phase is completed, and the two semi-moulds 37, 38 are opened and the sports shoe obtained is removed from the matrix 30, the solidified thermoplastics material, which forms the casing 112, will then be closely connected by melting to the connecting layer 115 and consequently to the soft insert 114, thus achieving a permanent connection of the soft insert 114 to the internal surfaces of the lateral flanks of the casing 112.

**.** Two methods of performing a phase of positioning the soft insert 114 on the matrix 30, according to the invention, will now be described.

. According to the first method, as shown in Figure 3, a mould is prepared in order to injection-mould a thermoplastics material comprising a matrix 30, a third semi-mould 31 and a fourth semi-mould 32, comprising a third cavity 33 and a fourth cavity 35 respectively, counter-shaped to reproduce the form of the soft insert 114.

. Subsequently, the thermoplastics material, intended to form the soft insert 114, made for example from one of the soft materials previously mentioned or from others, is injected, through a channel 34, into the space between the third and fourth cavity 33 and 35, so as to achieve the positioning of the soft material required for the subsequent phases shown in Figures 4 and 5 and previously described.

. In this case the complete process, according to the invention, is configured in a similar manner to a bi-injection process.

. In a second method of performing the positioning phase according to the invention, the soft material is positioned directly on the surface of the matrix 30, thus avoiding the preparation phase shown in Figure 3.

. In this case, the complete procedure, according to the invention, is configured in a manner similar to an over-injection process.

. The process according to the invention can therefore be applied both as a bi-injection and as an over-injection, advantageously using the relative known equipment.

. In bi-injection, the production times are rendered much shorter by performing both injections in two moments that are very close together, injecting in a first moment the soft material and in a second moment the rigid material, interposing a connecting layer in order to achieve the desired result.

. A second process that can be used is that of over-injection, which uses a soft material previously produced and applied directly onto the matrix, covered with a connecting layer, onto which is over-injected a rigid material, being much harder than the soft material.

. Naturally, the present invention has many applications, modifications or variations without departing from the scope of protection as defined by independent claims 1 or 10.

. Furthermore, the materials and equipment for production described in the present invention, as well as the forms and dimensions of the individual components, can be the most suitable for meeting specific requirements.

## Claims

1. Process of producing a sports shoe by injection-moulding thermoplastics material, said sports shoe comprising a rigid external shell (12; 112) defining a cavity (18) adapted to accommodate a foot of a user, at least one internal portion of said cavity (18) being covered with a soft material, said process including the use of a mould comprising a matrix (30), a first semi-mould (37) comprising a first cavity (43) and a second semi-mould (38) comprising a second cavity (45) counter-shaped to said matrix (30) to reproduce a respective semi-shell of said rigid external shell (12; 112), **characterised in that** it comprises the following phases:
a. positioning at least one insert (14; 114) made of said soft material on said matrix (30), said insert (14; 114) being adapted to cover said at least one internal portion of said cavity (18);
b. covering said at least one insert (14; 114) with a connecting layer (15; 115) formed by a thin sock fitted onto said matrix (30);
c. hermetically sealing said first and second semi-moulds (37, 38) onto said matrix (30) along the edges of said first and second cavity (43, 45);
d. injecting into the space existing between said first and second cavity (43, 45) and said connecting layer (15; 115) a thermoplastics material destined to form said rigid external shell (12; 112) in order to create a permanent connection of said at least one soft insert (14; 114) to said rigid external shell (12; 112), said connecting layer (15; 115) protecting and maintaining the position of said at least one soft insert (14; 114) onto said matrix (30) and substantially retaining the characteristics of said at least one soft insert (14; 114) unchanged;
e. opening said first and second semi-moulds (37, 38) when the injection of said thermoplastics material is completed and removing said sports shoe from said matrix (30).

2. Process according to claim 1, wherein the external shell (12; 112) is made at least partially of a thermoplastics material with a melting temperature of between 150 and 250 degrees centigrade and/or a hardness of between 45 and 100 SHD.

3. Process according to one of the preceding claims, wherein the rigid external shell (12; 112) is made at least partially of a thermoplastics material chosen from: ABS, EVA, HDPE, LDPE, POM, PP, PS, SAN, SBC, PA, PET, PU and TPU.

4. Process according to one of the preceding claims, wherein the connecting layer (15; 115) is made at least partially of a thermoplastics material that has a melting temperature that exceeds 150 degrees centigrade and/or a hardness that exceeds 80 SHA.

5. Process according to one of the preceding claims, wherein at least one insert (14; 114) of soft material is made at least partially of a thermoplastics material with a melting temperature of less than 150 degrees centigrade and/or a hardness of between 5 and 80 SHA.

6. Process according to one of the preceding claims, wherein at least one insert (14; 114) of soft material is made at least partially of a thermoplastics material chosen from: SEBS, PVC, TPU, foamed PUs, expanded EVA and TPE-SEBS.

7. Process according to one of the preceding claims, wherein the connecting layer (15; 115) is made of a material that is chemically compatible with the material of the at least one insert (14; 114) and/or wherein the connecting layer (15; 115) is made of a material that is chemically compatible with the material of the rigid external shell (12; 112).

8. Process according to one of the preceding claims, wherein the connecting layer (15; 115) has a thickness of between 0.04 millimetres and 1.00 millimetres.

9. Process according to one of the preceding claims, wherein the connecting layer (15; 115) has a thickness of between 0.04 millimetres and 0.55 millimetres.

10. Process according to one of the preceding claims, wherein the phase (a) of positioning the at least one insert (14; 114) is performed by:
- preparing a mould in order to injection-mould a thermoplastics material comprising the matrix (30), a third semi-mould (31) and a fourth semi-mould (32), comprising a third cavity (33) and a fourth cavity (35) respectively, counter-shaped to reproduce the form of the at least one insert (14; 114);
- injecting soft thermoplastics material into the space between said third and fourth cavity (33; 35), so as to achieve the positioning of the at least one insert (14; 114).

11. Process according to one of claims 1 to 9, wherein the phase (a) of positioning the at least one insert (14; 114) is performed by applying or resting said at least one insert (14; 114), separately obtained by using known processes, on one free end of the matrix (30).

## Patentansprüche

1. Prozess zur Herstellung eines Sportschuhs durch Spritzgießen von thermoplastischem Material, wobei der Sportschuh eine steife Außenschale (12; 112) aufweist, die einen Hohlraum (18) begrenzt, der geeignet ist, den Fuß eines Benutzers aufzunehmen, wobei mindestens ein Innenbereich des Hohlraums (18) mit einem weichen Material bedeckt ist, wobei der Prozess die Verwendung einer Form beinhaltet, die eine Matrix (30), eine erste Halbform (37) mit einem ersten Hohlraum (43) und eine zweite Halbform (38) mit einem zweiten Hohlraum (45), die komplementär zu der Matrix (30) geformt ist, aufweist, um eine entsprechende Halbschale der steifen Außenschale (12; 112) zu reproduzieren,
**dadurch gekennzeichnet, dass** der Prozess die folgenden Phasen beinhaltet:
a. Positionieren mindestens eines Einsatzes (14; 114), der aus dem weichen Material hergestellt ist, auf der Matrix (30), wobei der Einsatz (14; 114) ausgebildet ist, den mindestens einen Innenbereich des Hohlraums (18) abzudecken;
b. Bedecken des mindestens einen Einsatzes (14; 114) mit einer Verbindungsschicht (15; 115), die aus einem dünnen Socken gebildet ist, der auf die Matrix (30) aufgebracht ist;
c. hermetisches Abdichten der ersten und der zweiten Halbform (37, 38) auf der Matrix (30) entlang den Kanten des ersten und des zweiten Hohlraums (43, 45);
d. Einspritzen eines thermoplastischen Materials, das zur Bildung der steifen Außenschale (12; 112) vorgesehen ist, in den Raum, der zwischen dem ersten und dem zweiten Hohlraum (43, 45) und der Verbindungsschicht (15; 115) besteht, um eine permanente Verbindung des mindestens einen weichen Einsatzes (14; 114) mit der steifen Außenschale (12; 112) zu erzeugen, wobei die Verbindungsschicht (15; 115) die Lage des mindestens einen weichen Einsatzes (14; 114) auf der Matrix (30) schützt und bewahrt und die Eigenschaften des mindestens einen weichen Einsatzes (14; 114) im Wesentlichen unverändert belässt;
e. Öffnen der ersten und der zweiten Halbform (37, 38), wenn das Einspritzen des thermoplastischen Materials beendet ist, und Entfernen des Sportschuhs aus der Matrix (30).

2. Prozess nach Anspruch 1, wobei die Außenschale (12; 112) zumindest teilweise aus einem thermoplastischen Material mit einer Schmelztemperatur zwischen 150 und 250 Grad Celsius und/oder einer Härte zwischen 45 und 100 SHD hergestellt wird.

3. Prozess nach einem der vorhergehenden Ansprüche, wobei die steife Außenschale (12; 112) zumindest teilweise aus einem thermoplastischen Material hergestellt wird, das ausgewählt ist aus: ABS, EVA, HDPE, LDPE, POM, PP, PS, SAN, SBC, PA, PET, PU und TPU.

4. Prozess nach einem der vorhergehenden Ansprüche, wobei die Verbindungsschicht (15; 115) zumindest teilweise aus einem thermoplastischen Material hergestellt wird, das eine Schmelztemperatur hat, die 150 Grad Celsius übersteigt, und/oder eine Härte hat, die 80 SHA übersteigt.

5. Prozess nach einem der vorhergehenden Ansprüche, wobei mindestens ein Einsatz (14; 114) aus weichem Material zumindest teilweise aus einem thermoplastischen Material mit einer Schmelztemperatur von weniger als 150 Grad Celsius und/oder mit einer Härte zwischen 5 und 80 SHA hergestellt wird.

6. Prozess nach einem der vorhergehenden Ansprüche, wobei mindestens ein Einsatz (14; 114) aus weichem Material zumindest teilweise aus einem thermoplastischen Material hergestellt wird, das ausgewählt ist aus: SEBS, PVC, TPU, geschäumte PU-Materialien, erweitertes EVA und TPE-SEBS.

7. Prozess nach einem der vorhergehenden Ansprüche, wobei die Verbindungsschicht (15; 115) aus einem Material hergestellt wird, das chemisch kompatibel ist zu dem Material des mindestens einen Einsatzes (14; 114) und/oder wobei die Verbindungsschicht (15; 115) aus einem Material hergestellt wird, das chemisch zu dem Material der steifen Außenschale (12; 112) kompatibel ist.

8. Prozess nach einem der vorhergehenden Ansprüche, wobei die Verbindungsschicht (15; 115) eine Dicke zwischen 0,04 Millimeter und 1,00 Millimeter hat.

9. Prozess nach einem der vorhergehenden Ansprüche, wobei die Verbindungsschicht (15; 115) eine Dicke zwischen 0,04 Millimeter und 0,55 Millimeter hat.

10. Prozess nach einem der vorhergehenden Ansprüche, wobei die Phase (a) des Positionierens des mindestens einen Einsatzes (14; 114) bewerkstelligt wird durch:
- Bereitstellen einer Form zum Spritzgießen eines thermoplastischen Materials, die die Matrix (30), eine dritte Halbform (31) und eine vierte Halbform (32) mit entsprechend einem dritten Hohlraum (33) und einem vierten Hohlraum (35), die komplementär geformt sind, aufweist, um die Gestalt des mindestens einen Einsatzes (14; 114) zu reproduzieren;
- Einspritzen von weichem thermoplastischen Material in dem Raum zwischen dem dritten und dem vierten Hohlraum (33; 35), sodass die Positionierung des mindestens einen Einsatzes (14; 114) erreicht wird.

11. Prozess nach einem der Ansprüche 1 bis 9, wobei die Phase (a) des Positionierens des mindestens einen Einsatzes (14; 114) bewerkstelligt wird, indem der mindestens eine Einsatz (14; 114), der separat durch bekannte Prozesse erhalten wird, auf ein freies Ende der Matrix (30) aufgebracht oder darauf abgelegt wird.

## Revendications

1. Procédé de fabrication d'une chaussure de sport par moulage par injection de matière thermoplastique, ladite chaussure de sport comprenant une coque externe rigide (12; 112) définissant une cavité (18) adaptée pour accueillir un pied d'un utilisateur, au moins une partie interne de ladite cavité (18) étant recouverte d'un matériau souple, ledit procédé comprenant l'utilisation d'un moule comprenant une matrice (30), un premier demi-moule (37) comprenant une première cavité (43) et un second demi-moule (38) comprenant une seconde cavité (45) contre-formant ladite matrice (30) pour reproduire une demi-coque respective de ladite coque externe rigide (12; 112), **caractérisé en ce qu'**il comprend les étapes suivantes:
a. positionner au moins un insert (14; 114) fait d'un matériau souple sur ladite matrice (30), ledit insert (14; 114) étant adapté pour recouvrir ladite au moins une partie interne de ladite cavité (18);
b. recouvrir ledit au moins un insert (14; 114) d'une couche de liaison (15; 115) formée par une semelle fine fixée dans ladite matrice (30);
c. sceller hermétiquement lesdits premier et second demi-moules (37, 38) sur ladite matrice (30) le long des bords desdites première et seconde cavités (43, 45);
d. injecter dans l'espace existant entre lesdites première et deuxième cavités (43, 45) et ladite couche de liaison (15; 115) un matériau thermoplastique destiné à former ladite coque externe rigide (12; 112) afin de créer une connexion permanente dudit au moins un insert souple (14; 114) à ladite coque externe rigide (12; 112), ladite couche de liaison (15; 115) protégeant et maintenant la position dudit au moins un insert souple (14 ; 114) dans ladite matrice (30) et conservant sensiblement les caractéristiques dudit au moins un insert souple (14; 114) inchangées ;
e. ouvrir lesdits premier et second demi-moules (37, 38) quand l'injection desdits matériaux thermoplastiques est réalisée et enlever ladite chaussure de sport de ladite matrice (30).

2. Procédé selon la revendication 1, dans lequel la coque externe (12; 112) est faite au moins partiellement d'un matériau thermoplastique ayant une température de fusion comprise entre 150 et 250 degrés centigrades et/ou une dureté comprise entre 45 et 100 SHD.

3. Procédé selon l'une des revendications précédentes, dans lequel la coque externe rigide (12; 112) est faite au moins partiellement d'un matériau thermoplastique choisi parmi: ABS, EVA, HDPE, LDPE, POM, PP, PS, SAN, SBC , PA, PET, PU et TPU.

4. Procédé selon l'une des revendications précédentes, dans lequel la couche de liaison (15; 115) est faite au moins partiellement d'un matériau thermoplastique ayant une température de fusion supérieure à 150 degrés centigrades et/ou une dureté supérieure à 80 SHA.

5. Procédé selon l'une des revendications précédentes, dans lequel au moins un insert (14; 114) en matière souple est fait au moins partiellement d'un matériau thermoplastique ayant une température de fusion inférieure à 150 degrés centigrades et/ou une dureté comprise entre 5 et 80 SHA.

6. Procédé selon l'une des revendications précédentes, dans lequel au moins un insert (14; 114) en matériau souple est fait au moins partiellement d'un matériau thermoplastique choisi parmi: SEBS, PVC, TPU, mousses de PU, EVA expansé et TPE- SEBS.

7. Procédé selon l'une des revendications précédentes, dans lequel la couche de liaison (15; 115) est faite d'un matériau chimiquement compatible avec le matériau dudit au moins un insert (14; 114) et/ou dans lequel la couche de liaison (15; 115) est faite d'un matériau chimiquement compatible avec le matériau de la coque externe rigide (12; 112).

8. Procédé selon l'une des revendications précédentes, dans lequel la couche de liaison (15; 115) a une épaisseur comprise entre 0,04 millimètre et 1,00 millimètre.

9. Procédé selon l'une des revendications précédentes, dans lequel la couche de liaison (15; 115) a une épaisseur comprise entre 0,04 millimètres et 0,55 millimètres.

10. Procédé selon l'une des revendications précédentes, dans lequel l'étape (a) de positionnement de l'au moins un insert (14; 114) est réalisée par:
- préparation d'un moule pour mouler par injection une matière thermoplastique comprenant la matrice (30), un troisième demi-moule (31) et un quatrième demi-moule (32), comprenant respectivement une troisième cavité (33) et une quatrième cavité (35), en contre-forme pour reproduire la forme dudit au moins un insert (14; 114);
- injection de la matière thermoplastique souple dans l'espace entre lesdites troisième et quatrième cavités (33; 35), de manière à réaliser le positionnement de l'au moins un insert (14; 114) .

11. Procédé selon l'une des revendications 1 à 9, dans lequel l'étape (a) de positionnement de l'au moins un insert (14; 114) est réalisée en appliquant ou en reposant ledit au moins un insert (14; 114), obtenu séparément par l'utilisation de procédés connus, sur une extrémité libre de la matrice (30).
